# EUROPÄISCHE PATENTANMELDUNG

(11) **EP 2 298 939 A2**
(43) Veröffentlichungstag der Anmeldung: **23.03.2011**
(21) Anmeldenummer: 10176198.9
(22) Anmeldetag: 10.09.2010
(51) Int. Cl.: C21D 1/10, C21D 9/40, H05B 6/02, H05B 6/38, C21D 1/613, C21D 9/00

(54) **Vorrichtung zum induktiven Erwärmen und Verwendung einer solchen Vorrichtung**

(30) Priorität: 10.09.2009 DE 102009040823
(71) Anmelder: SMS Elotherm GmbH, 42897 Remscheid (DE)
(72) Erfinder: Dappen, Stefan, Dr., 52068, Aachen (DE); Schulte, Peter, 42119, Wuppertal (DE); Blum, Matthias, Dr., 51688, Wipperfürth (DE); Bröcking, Martin, 42859, Remscheid (DE)
(74) Vertreter: Cohausz & Florack

(57) **Zusammenfassung**

Die Erfindung betrifft eine Vorrichtung zum induktiven Erwärmen von einer an einem metallischen Werkstück ausgebildeten Zone, an die ein schmaler, vor Erwärmung zu schützender Materialabschnitt S grenzt, mit mindestens einem Induktor 1,1a. Um mit einer solchen Vorrichtung gleichzeitig zwei nebeneinander angeordnete Bahnen auf Härtetemperatur zu erwärmen, ohne dass dabei der zwischen den zu erwärmenden Bahnen liegende Materialabschnitt durchgehend auf diese Temperatur erwärmt wird, sieht die Erfindung eine Kühleinrichtung K,Ka vor, die während der Erwärmung der zu härtenden Zone L1,L2 ein Kühlfluid auf den vor Erwärmung zu schützenden Materialabschnitt S des Werkstücks ausbringt. Eine erfindungsgemäße Vorrichtung 1;101 eignet sich insbesondere zum gleichzeitigen induktiven Erwärmen von zwei nebeneinander und mit Abstand zueinander an einem Werkstück ausgebildeten Bahnen L1,L2, die durch einen schmalen, vor Erwärmung zu schützenden Materialabschnitt (S) getrennt sind.

## Beschreibung

Die Erfindung betrifft eine Vorrichtung zum induktiven Erwärmen von einer an einem metallischen Werkstück ausgebildeten Zone, an die ein schmaler, vor Erwärmung zu schützender Materialabschnitt grenzt, mit mindestens einem Induktor.

Darüber hinaus betrifft die Erfindung eine besonders vorteilhafte Verwendung einer solchen Vorrichtung.

Vorrichtungen der hier in Rede stehenden Art werden typischerweise zum abschnittsweisen, gegebenenfalls im Umlauf durchgeführten Härten von metallischen Werkstücken eingesetzt, um den jeweils zu härtenden Abschnitt des Werkstücks auf Härtetemperatur zu bringen. Anschließend wird auf den jeweils erwärmten Abschnitt ein Kühlfluid ausgebracht, durch das der betreffende Abschnitt so schnell abkühlt, dass sich in ihm Härtegefüge bildet.

Um die beiden zu härtenden Bahnen gleichzeitig erwärmen zu können, werden in bekannten Vorrichtungen dieser Art Induktoren verwendet, die in der Fachsprache auch "Doppelinduktoren" genannt werden. Mit solchen Doppelinduktoren lässt sich bei Werkstücken, bei denen parallel verlaufende Bahnen gehärtet werden sollen, mit geringem apparativen Aufwand eine zeitsparende und energieeffiziente induktive Erwärmung durchführen.

Die zu diesem Zweck eingesetzten Induktoren weisen typischerweise zwei in Reihe geschaltete Induktoräste auf, von denen der eine Induktorast der einen zu erwärmenden Bahn zugeordnet ist und der andere der anderen Bahn. Die Stromversorgung erfolgt dabei über einen seitlich an dem Doppelinduktor vorgesehenen Anschluss.

Besonders effizient lassen sich mit Induktoren dieser Art die als Laufbahnen für die jeweiligen Wälzkörper dienenden Rillen von großen doppelreihigen Kugellagern auf die jeweils erforderliche Härtetemperatur erwärmen. Die Laufbahnen von solchen Wälzlagern müssen eine ausreichende Härte aufweisen, um den im Betrieb auftretenden, lokal engbegrenzten hohen Druckbelastungen dauerhaft standhalten zu können. Der die Wälzkörper des Lagers führende, zwischen den Laufbahnen vorhandene Steg muss dagegen eine ausreichende Zähigkeit besitzen, um die im Betrieb auftretenden Querkräfte ohne die Gefahr eines Bruchs sicher aufnehmen zu können.

Zum Härten der Laufbahnen von solchen großen doppelreihigen Kugellagern werden die beiden Laufbahnen gleichzeitig mit einem Doppelinduktor erwärmt. Auf diese Weise ergibt sich im Gegensatz zu einer nacheinander erfolgenden Härtung beider Laufbahnen ein erhöhter Durchsatz trotz Verwendung nur einer Leistungsquelle. Ebenso werden wechselseitige Anlasseffekte vermieden, zu denen es bei einer aufeinander folgenden Härtung in Folge von Wärmeleitung kommen kann.

Ein Nachteil der gleichzeitigen induktiven Erwärmung von parallel zueinander verlaufenden, durch einen in der Regel streifen- oder stegartig ausgebildeten Materialabschnitt getrennten Bahnen besteht allerdings darin, dass auch der zwischen den Bahnen liegende Materialabschnitt von dem von dem Induktor induzierten elektromagnetischen Feld erfasst wird. Diese Erwärmung kann so weit gehen, dass sich über die gesamte Breite des zwischen den zu härtenden Bahnen liegenden Materialabschnitts Härtegefüge bildet.

Besonders kritisch erweist sich dieser Effekt beim Härten der Laufbahnen von doppelreihigen Wälzlagern, bei denen der Abstand zwischen den Laufbahnen gering, der zwischen ihnen verbleibende Steg also vergleichbar dünn ist. Kommt es zur Durchhärtung des Steges, verliert er die erforderliche Zähigkeit und es kann zu Materialbruch in Folge der im Betrieb auftretenden Belastungen kommen.

Vor diesem Hintergrund bestand die Aufgabe der Erfindung darin, mit einfachen Mitteln eine Vorrichtung zu schaffen, mit der sich gleichzeitig zwei nebeneinander angeordnete Bahnen auf Härtetemperatur erwärmen lassen, ohne dass dabei der zwischen den zu erwärmenden Bahnen liegende Materialabschnitt durchgehend auf diese Temperatur erwärmt wird. Ebenso sollte eine vorteilhafte Verwendung einer solchen Vorrichtung angegeben werden.

In Bezug auf die Vorrichtung ist diese Aufgabe erfindungsgemäß dadurch gelöst worden, dass eine solche Vorrichtung gemäß Anspruch 1 ausgebildet ist. Vorteilhafte Ausgestaltungen einer erfindungsgemäßen Vorrichtung sind in den auf Anspruch 1 rückbezogenen Ansprüchen angegeben.

Besonders effektiv lässt sich eine erfindungsgemäße Vorrichtung für den in Anspruch 9 angegebenen Zweck nutzen. Vorteilhafte Ausgestaltungen dieser erfindungsgemäßen Verwendung sind in den auf Anspruch 9 rückbezogenen Ansprüchen angegeben.

Eine erfindungsgemäße Vorrichtung umfasst neben dem Induktor eine Kühleinrichtung, die während der Erwärmung der zu härtenden Zone ein Kühlfluid auf den an diese Zone grenzenden schmalen Materialabschnitt des Werkstücks ausbringt. Durch den von der Kühleinrichtung auf den Materialabschnitt abgegebenen Kühlfluidstrom lässt sich sicher verhindern, dass der betreffende schmale Materialabschnitt durch Wärmeleitung Härtetemperatur erreicht, bei der in dem Materialabschnitt ein für die Ausbildung von Härtegefüge geeigneter Gefügezustand vorliegt.

Die beispielsweise eine oder mehrere Düsen umfassende Kühleinrichtung ist dementsprechend so positioniert, dass das von ihr ausgebrachte Fluid im praktischen Einsatz möglichst konzentriert und direkt auf den an die zu erwärmende Zone grenzenden schmalen Materialabschnitt trifft.

Aufgrund ihrer Kühleinrichtung eignet sich eine erfindungsgemäße Vorrichtung grundsätzlich für alle Erwärmungsaufgaben, bei denen eine Erwärmung eines eng angrenzend zur jeweiligen Erwärmungszone angeordneten Abschnitts durch Wärmeleitung gezielt verhindert werden soll.

Besonders vorteilhaft wirkt sich dies dann aus, wenn der in einer erfindungsgemäßen Vorrichtung eingesetzte Induktor zum gleichzeitigen induktiven Erwärmen von zwei nebeneinander mit Abstand angeordneten, an einem metallischen Werkstück ausgebildeten und durch einen schmalen, nicht zu härtenden Materialabschnitt getrennten Bahnen bestimmt ist. Ein solcher Induktor hat typischerweise in Übereinstimmung mit dem Stand der Technik einen ersten Induktorast, der der ersten Bahn zugeordnet ist, und einen zweiten Induktorast, der der zweiten Bahn zugeordnet ist, sowie zwei Versorgungsäste, über die die Induktoräste gemeinsam an eine Stromversorgung anschließbar sind.

Um eine besonders kompakte Bauform zu erreichen, kann bei Verwendung eines Induktors der voranstehend erläuterten Art die Kühleinrichtung beispielsweise in dem zwischen den Induktorästen vorhandenen Raum angeordnet sein.

Genauso ist es aber auch möglich, die Düsen der Kühleinrichtung außerhalb des von den Induktorästen umgrenzten Raums anzuordnen. Dies erweist sich dann gegebenenfalls als zweckmäßig, wenn die Wirkung des Induktors durch die Kühleinrichtung möglichst wenig beeinflusst werden soll oder die Kühleinrichtung aus Materialien gefertigt sein soll, die den hohen Erwärmungstemperaturen im Bereich der Laufbahnen nicht standhalten. Bei einer Anordnung der Kühleinrichtung außerhalb des von den Induktorästen umgrenzten Raums wird der von der Kühleinrichtung ausgebrachte Fluidstrom zweckmäßigerweise so ausgerichtet, dass er im Wirkungsbereich des Induktors, insbesondere im Bereich des von den Induktorästen umgrenzten Raums, auf den zu kühlenden Steg trifft. Dazu kann die Düse eine in den Raum zwischen den Induktorästen reichende, beispielsweise aus einem ausreichend stabilen Rohr gebildete Leitung aufweisen, die in den zwischen den Induktorästen vorhandenen Raum weist und an deren freien Ende die jeweilige Düse zum Ausbringen des Kühlfluids ausgebildet ist.

Erfindungsgemäß können bei einem in der voranstehend erläuterten Weise für das gleichzeitige Erwärmen von zwei durch eine Materialbahn eingesetzten Induktor die Induktoräste und die Versorgungsäste derart miteinander verschaltet sein, dass die quer zur Längserstreckung der Bahnen laufenden Ströme sich im Bereich des die Bahnen voneinander trennenden Materialabschnitts aufheben. Auf diese Weise findet im Werkstück allenfalls ein minimierter Stromfluss über den zwischen den zu härtenden Bahnen vorhandenen, vor Erwärmung zu schützenden Materialabschnitt des Werkstückes statt. Dementsprechend bewirken die von dem erfindungsgemäßen Induktor selbst induzierten Felder trotz der gleichzeitigen Einwirkung auf die jeweils zu erwärmenden Bahnen keinen direkten Wärmeeintrag mehr, der sich über die gesamte Breite des zwischen ihnen vorhandenen Materialabschnitts erstreckt. Dies schließt selbstverständlich nicht aus, dass die jeweils unmittelbar an die zu härtenden Bahnen angrenzenden Oberflächenabschnitte des die Bahnen trennenden Materialabschnitts gezielt auf Härtetemperatur gebracht werden, um auch dort eine ausreichende Widerstandsfähigkeit gegen abrasiven Verschleiß zu sichern. Jedoch wird durch die erfindungsgemäße Verschaltung der Induktoräste sichergestellt, dass die von ihnen induzierten Felder so begrenzt sind, dass in dem Materialabschnitt ein Bereich verbleibt, der in Folge der Wirkung der induzierten Felder nicht auf eine für die Bildung von Härtegefüge ausreichende Temperatur erwärmt wird.

Bei in einer erfindungsgemäßen Vorrichtung eingesetzten und in der voranstehend beschriebenen, erfindungsgemäßen Weise verschalteten Induktoren, bei denen unmittelbar nebeneinander verlaufende Abschnitte der den zu erwärmenden Bahnen zugeordneten Induktorästen vorhanden sind, lässt sich die erfindungsgemäße Verschaltung beispielsweise dadurch bewerkstelligen, dass die betreffenden Induktoräste so an die Versorgungsäste angeschlossen sind, dass die Stromflussrichtung durch in Längsrichtung der zu erwärmenden Bahnen ausgerichtete, parallel zueinander verlaufende Abschnitte der Induktoräste gegenläufig ist.

Grundsätzlich lässt sich die erfindungsgemäße Verschaltung und Anordnung der Induktoräste auch dann verwirklichen, wenn die Induktoräste in Reihe geschaltet sind. Eine besonders einfache Schaltung und Anordnung ergibt sich jedoch dann, wenn die Induktoräste parallel zueinander geschaltet sind. Die Parallelschaltung ermöglicht insbesondere kurze und einfach geformte Versorgungsäste.

Genauso ist es möglich, bei einem erfindungsgemäß ausgebildeten Induktor auch einzelne Abschnitte der Induktoräste parallel oder in Reihe zu schalten. Auf diese Weise lassen sich die Erwärmungsleistungen an die jeweilige Erwärmungsaufgabe oder die Besonderheiten der Werkstückgeometrie anpassen.

Eine besonders einfache Gestaltung des Induktors ergibt sich dann, wenn die Versorgungsäste zwischen den Induktorästen verlaufen. In diesem Fall wird der von den Induktorästen umgrenzte Raum für die Anordnung der Induktoräste genutzt, so dass eine besonders kompakte Bauform des Induktors erreicht wird. Der besondere Vorteil dieser Anordnung besteht dabei darin, dass sich die Versorgungsäste dazu nutzen lassen, das im Bereich des die zu erwärmenden Bahnen trennenden Materialabschnitts wirksame elektromagnetische Feld auf ein Minimum zu reduzieren.

Dies erweist sich insbesondere dann als zweckmäßig, wenn bei einem erfindungsgemäßen Induktor die Induktoräste jeweils mindestens zwei in Reihe geschaltete Erwärmungsabschnitte, die quer zur jeweils zu härtenden Bahn verlaufen und eine an deren Querschnittsform angepasste Form besitzen, und einen Verbindungsabschnitt aufweisen, der die Erwärmungsabschnitte miteinander verbindet. So lassen sich in erfindungsgemäßer Weise beispielsweise auch solche Induktoren verschalten und betreiben, bei denen die Induktoräste drei oder mehr Erwärmungsabschnitte umfassen. Eine insbesondere für die Erwärmung von parallel verlaufenden Laufbahnen von Großkugellagern besonders geeignete Ausgestaltung der Erfindung sieht in diesem Zusammenhang vor, dass jeweils mindestens vier in Reihe geschaltete Erwärmungsabschnitte vorhanden sind, um besonders hohe Erwärmungsleistungen bereitzustellen. Bei einer Induktoräste mit drei oder mehr Erwärmungsabschnitten umfassenden Ausgestaltung ist typischerweise jeweils mindestens ein Verbindungsabschnitt eng benachbart zu den Versorgungsästen angeordnet.

Sollen unterschiedliche Erwärmungsleistungen eingebracht werden, kann dies auch dadurch erfolgen, dass die Induktoräste bzw. deren Erwärmungsabschnitte jeweils eine unterschiedliche Länge der ihnen jeweils zugeordneten zu härtenden Bahn abdecken.

Aufgrund seiner besonderen Gestaltung eignet sich ein erfindungsgemäß ausgebildeter Induktor insbesondere zum gleichzeitigen induktiven Erwärmen von zwei nebeneinander und mit Abstand zueinander an einem Werkstück ausgebildeten Bahnen. Bei einem solchen Werkstück handelt es sich typischerweise um ein Wälzlagerteil, in das zwei die zu erwärmenden Bahnen bildende und durch einen Steg voneinander getrennte Rillen für Wälzkörper des Wälzlagers eingeformt sind. Durch Verwendung eines erfindungsgemäßen Induktors ist es besonders einfach möglich, die Laufbahnen des Wälzlagerteils bei geringem apparativem Aufwand effektiv zu härten, während gleichzeitig sichergestellt ist, dass der Werkstoff des zwischen den Laufbahnen verbleibende Stegs ausreichend zäh bleibt.

Nachfolgend wird die Erfindung anhand einer Ausführungsbeispiele darstellenden Zeichnung näher erläutert. Es zeigen jeweils schematisch:

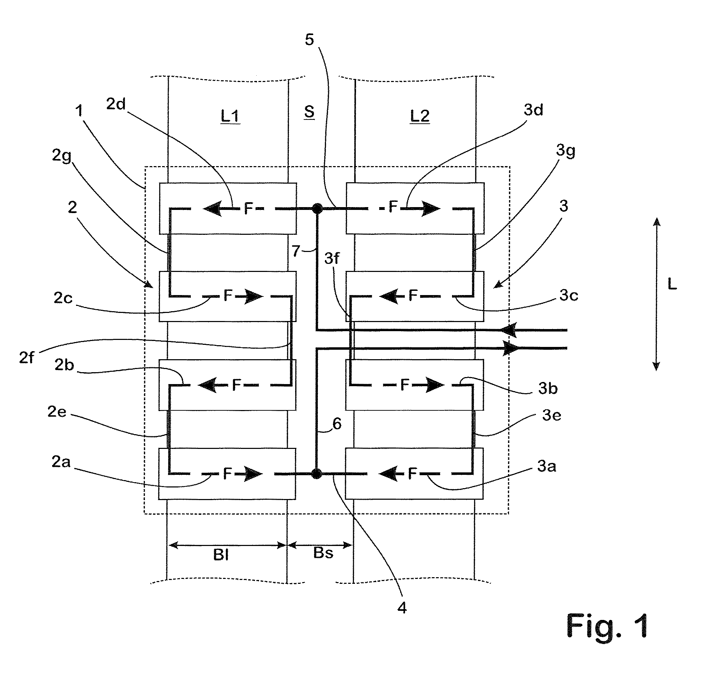

- Fig. 1: eine Verschaltung der Induktor- und Versorgungsäste eines Induktors zum Härten der Laufbahnen eines doppelreihigen Wälzlagers;
- Fig. 2: den gemäß Fig. 1 verschalteten Induktor in einer perspektivischen Ansicht;
- Fig. 3: eine alternative Ausführung eines gemäß Fig. 1 verschalteten Induktors in einer perspektivischen Ansicht;
- Fig. 4: eine Verschaltung der Induktor- und Versorgungsäste eines anderen Induktors zum Härten der Laufbahnen eines doppelreihigen Wälzlagers;

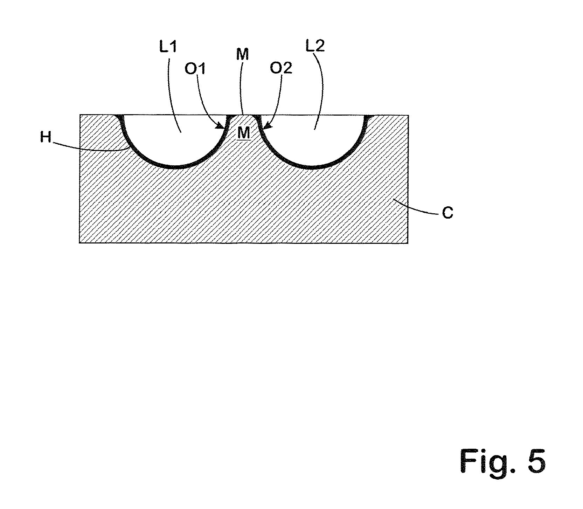

- Fig. 5: einen Schnitt durch eine Lagerschale eines doppelreihigen Wälzlagers.

Die in den Figuren dargestellten Induktoren 1,1a,101 dienen zum Erwärmen der hier der Übersichtlichkeit halber nur angedeuteten Laufbahnen L1,L2 einer weiter nicht dargestellten Lagerschale C eines ebenfalls nicht gezeigten doppelreihigen Wälzlagers. Die Laufbahnen L1,L2 sind dabei als parallel zueinander verlaufende Rillen in das Stahlmaterial der Lagerschale C eingeformt und durch einen stegförmigen, zwischen ihnen verbleibenden schmalen Materialabschnitt S voneinander getrennt. Dessen Breite Bs ist deutlich kleiner als die Breite B1 der Laufbahnen L1,L2.

Jeder der Induktoren 1,1a,101 weist zwei parallel zueinander geschaltete Induktoräste 2,3; 102,103 auf, von denen der jeweils erste Induktorast 2,102 der Laufbahn L1 und der jeweils zweite Induktorast 3,103 der Laufbahn L2 zugeordnet ist.

Bei den Induktoren 1,1a weist jeder der Induktoräste 2,3 vier in Reihe geschaltete Erwärmungsabschnitte 2a,2b,2c,2d und 3a,3b,3c,3d auf, die jeweils quer zu der ihnen zugeordneten Laufbahn L1,L2 ausgerichtet sind.

Dabei ist der Erwärmungsabschnitt 2a durch einen parallel zu der zugeordneten Laufbahn L1 ausgerichteten, deren äußerer, von der Laufbahn L2 abgewandten Seite zugeordneten Verbindungsabschnitt 2e mit dem Erwärmungsabschnitt 2b, der Erwärmungsabschnitt 2b durch einen ebenfalls parallel zu der zugeordneten Laufbahn L1 ausgerichteten, jedoch deren inneren, der Laufbahn L2 direkt benachbarten Seite zugeordneten Verbindungsabschnitt 2f mit dem Erwärmungsabschnitt 2c, und der Erwärmungsabschnitt 2c durch einen ebenfalls parallel zu der zugeordneten Laufbahn L1 ausgerichteten, jedoch wie der Verbindungsabschnitt 2e deren äußeren Seite zugeordneten Verbindungsabschnitt 2g mit dem Erwärmungsabschnitt 2d verbunden.

Genauso ist der Erwärmungsabschnitt 3a durch einen parallel zu der zugeordneten Laufbahn L1 ausgerichteten, deren äußerer, von der Laufbahn L3 abgewandten Seite zugeordneten Verbindungsabschnitt 3e mit dem Erwärmungsabschnitt 3b, der Erwärmungsabschnitt 3b durch einen ebenfalls parallel zu der zugeordneten Laufbahn L1 ausgerichteten, jedoch deren inneren, der Laufbahn L3 direkt benachbarten Seite zugeordneten Verbindungsabschnitt 3f mit dem Erwärmungsabschnitt 3c, und der Erwärmungsabschnitt 3c durch einen ebenfalls parallel zu der zugeordneten Laufbahn L1 ausgerichteten, jedoch wie der Verbindungsabschnitt 3e deren äußeren Seite zugeordneten Verbindungsabschnitt 3g mit dem Erwärmungsabschnitt 3d verbunden.

Die Erwärmungsabschnitte 2a-2d und 3a-3d sind jeweils an die Querschnittsform der Laufbahnen L1,L2 angepasst, so dass sie in Betriebsstellung mit geringem Abstand zu deren Oberfläche formschlüssig in der zugeordneten Laufbahn L1,L2 sitzen. Die Erwärmungsabschnitte 2a-2d, 3a-3d sind zur besseren Konzentration des von ihnen induzierten Feldes in an sich bekannter Weise mit hier nur angedeuteten weichmagnetischen Kernen oder einer entsprechend wirkenden, hier nicht gezeigten Beblechung versehen.

An ihrem nicht mit dem benachbarten Erwärmungsabschnitt 2b bzw. 3b verbundenen Ende sind die Erwärmungsabschnitte 2a und 3a in einer Brücke 4 miteinander verbunden. In gleicher Weise sind die nicht mit den benachbarten Erwärmungsabschnitten 2c bzw. 3c verbundenen Enden der Erwärmungsabschnitte 2d und 3d miteinander über eine Brücke 5 verbunden. Die Brücken 4,5 sind dabei quer zu den Laufbahnen L1,L2 ausgerichtet und überspannen den Materialabschnitt S.

Zusätzlich ist an die Brücke 4 ein erster Versorgungsast 6 und an die Brücke 5 ein zweiter Versorgungsast 7 des Induktors 1,1a angeschlossen. Die an eine hier nicht gezeigte Stromversorgung angeschlossenen Versorgungsäste 6,7 sind in dem seitlich an ihren Längsseiten durch die Induktoräste 2,3 begrenzten Raum R angeordnet und achsparallel zu den Laufbahnen L1,L2 sowie den Verbindungsabschnitten 2e-2g und 3e-3g der Induktoräste 2,3 ausgerichtet. Ihre Länge ist um ein geringes Untermaß kleiner als die halbe in Längsrichtung L der Laufbahnen L1,L2 gemessene Länge der Induktoräste 2,3, so dass sie sich in der Mitte des Induktors 1,1a unter Einhaltung eines für die elektrische Isolierung ausreichenden Abstands treffen.

Unabhängig davon, wie der Stromfluss F in den Versorgungsästen 6,7 und den von ihnen versorgten Induktorästen 2,3 eingespeist wird, ist der Stromfluss F in den Versorgungsästen 6,7 stets entgegengesetzt zum Stromfluss der somit parallel und nächst benachbart angeordneten Verbindungsäste 2f,3f ausgerichtet. Auf diese Weise hebt sich das über die Verbindungsäste 2f,3f in den Materialabschnitt S induzierte Feld gegen das von den Versorgungsästen 6,7 induzierte Feld auf. Eine direkte Erwärmung des Materialabschnitts 6,7 durch die von dem Induktor 1,1a induzierten Felder wird somit unterdrückt.

Lediglich in seinen an die Laufbahnen L1,L2 angrenzenden Oberflächenbereichen 01,02 wird der Materialabschnitt S durch die von den Erwärmungsabschnitten 2a-2d bzw. 3a-3d induzierten elektromagnetischen Feldern auf Härtetemperatur erwärmt, so dass sich beim anschließenden Abschrecken dort ebenfalls Härtegefüge H einstellt.

Um zu verhindern, dass der Materialabschnitt S über seine gesamte Breite Bs in Folge von Wärmeleitung auf Härtetemperatur erwärmt wird, ist bei den Induktoren 1,1a jeweils eine Kühleinrichtung K bzw. Ka vorgesehen.

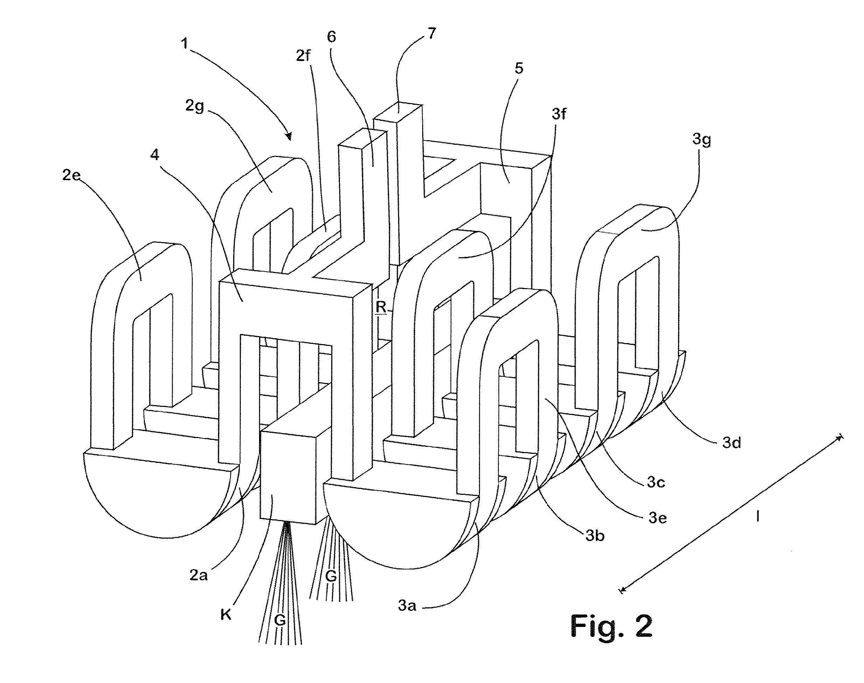

Beim in Fig. 2 dargestellten Induktor 1 ist die Kühleinrichtung K im Raum R zwischen den Induktorästen 2,3 angeordnet. Die Kühleinrichtung K des Induktors 1 weist dabei ein quaderförmiges, sich über die Länge 1 des Induktors 1 erstreckendes Gehäuse auf und umfasst hier nicht gezeigte, in regelmäßigen Abständen auf der dem Abschnitt S zugeordneten Unterseite angeordnete, hier nicht sichtbare Düsen. Über die Düsen wird ein Kühlfluidstrom G, bei dem es sich beispielsweise um Luft oder ein anderes gasförmiges Medium, wie Stickstoff, handelt, während der Erwärmungsbehandlung auf den Materialabschnitt S geblasen.

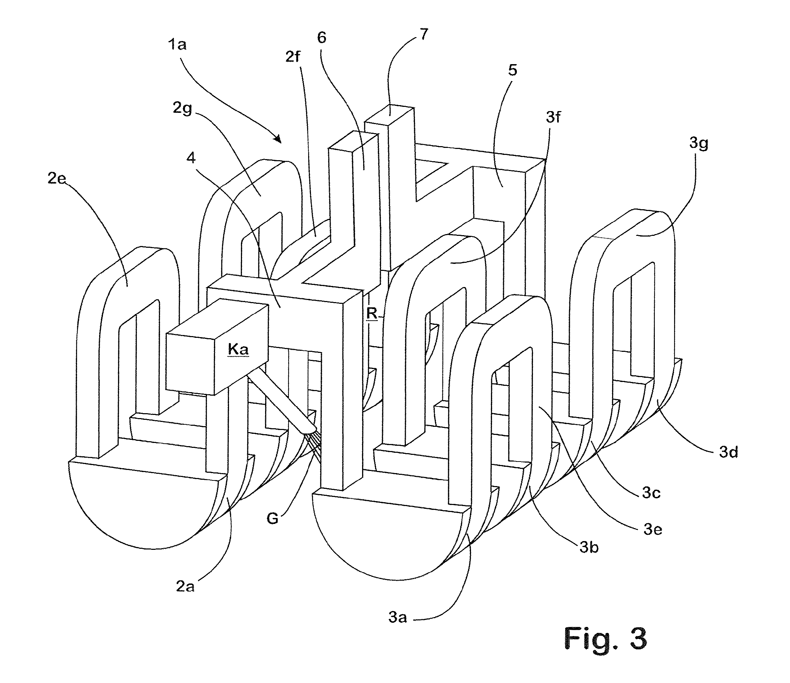

Beim in Fig. 3 gezeigten Induktor 1a ist die zugeordnete Kühleinrichtung Ka in Vorschubrichtung V vor den Induktorästen 2,3 angeordnet. Die Kühleinrichtung Ka weist dabei eine an der Spitze eines in den Raum R zwischen den Induktorästen 2,3 weisenden Rohres ausgebildete, hier nicht sichtbare Düse auf, aus der ein aus Luft oder einem anderen geeigneten gasförmigen gebildete Kühlfluidstrom G austritt und auf den zu kühlenden Materialabschnitt S trifft.

Der so erzeugte jeweilige Kühlfluidstrom G transportiert die überschüssige Wärme ab, so dass in dem mittleren Bereich des Materialabschnitts S, der nicht unmittelbar von den von den Induktorästen 2,3 erzeugten Feldern erfasst wird, die Härtetemperatur nicht erreicht wird. Der zwischen den seitlichen Oberflächenbereichen 01,02 nach der Abschreckung verbleibende mittlere Bereich M des Materialabschnitts S bleibt auf diese Weise so zäh, dass er die im Betrieb auftretenden Belastungen sicher aufnehmen kann.

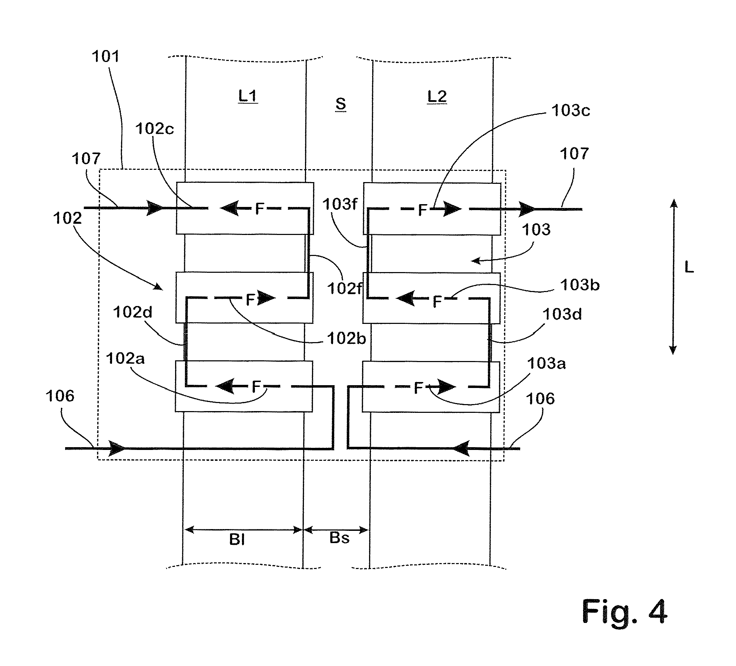

Die Induktoräste 102,103 des in Fig. 4 dargestellten Induktors 101 weisen drei parallel zueinander ausgerichtete, in Reihe geschaltete Erwärmungsabschnitte 102a-102c bzw. 103a-103c auf, von denen die zueinander benachbarten Erwärmungsabschnitte 102a-102c bzw. 103a-103c wie beim Induktor 1,1a über jeweils einen Verbindungsabschnitt 102d,102e bzw. 103d,103e miteinander verbunden sind. Die Verbindungsabschnitte 102d, 103d sind dabei den äußeren, voneinander abgewandten Seiten der jeweils zugeordneten Laufbahn L1,L2 zugeordnet, während die Verbindungsabschnitte 102e,103e gegenüberliegend zueinander und eng benachbart zum Materialabschnitt S angeordnet sind.

Der Erwärmungsabschnitt 102a ist an seinem einen Ende an einen ersten Versorgungsast 106 des Induktors 101 angeschlossen, während sein anderes Ende über einen Verbindungsabschnitt 102d mit dem einen Ende des mittleren Erwärmungsabschnitts 102b verbunden ist. Mit seinem anderen Ende ist der mittlere Erwärmungsabschnitt 102b über den Verbindungsabschnitt 102e mit dem einen Ende des dritten Erwärmungsabschnitts 102c des Induktorastes 102 verkoppelt. An das andere Ende des Erwärmungsabschnitts ist ein zweiter Versorgungsast 107 angeschlossen.

Der Induktorast 103 ist spiegelsymmetrisch zum Induktorast 102 aufgebaut. Dementsprechend ist sein Erwärmungsabschnitt 103a an seinem einen Ende mit dem ersten Versorgungsast 106 des Induktors 101 verbunden, während sein anderes Ende über einen Verbindungsabschnitt 103d mit dem einen Ende des mittleren Erwärmungsabschnitts 103b verbunden ist. Mit seinem anderen Ende ist der mittlere Erwärmungsabschnitt 103b über den Verbindungsabschnitt 103e mit dem einen Ende des dritten Erwärmungsabschnitts 103c des Induktorastes 103 verkoppelt. An das andere Ende des Erwärmungsabschnitts ist wiederum der zweite Versorgungsast 107 angeschlossen.

Durch diese Verschaltung ist der Stromfluss F durch die Induktoräste 102,103 jeweils gegenläufig, so dass sich auch die im Bereich der eng benachbart zueinander und zum Materialabschnitt S von den Verbindungsabschnitten 102e,103e induzierten Felder gegenseitig aufheben. Eine direkte Erwärmung des Materialabschnitts S über dessen Gesamte Breite Bs wird so wirksam unterdrückt.

Selbstverständlich kann auch der Induktor 101 mit einer hier allerdings nicht gezeigten Kühleinrichtung zur Kühlung eines jeweils zwischen den zu härtenden Bahnen angeordneten Materialstreifens versehen sein.

### BEZUGSZEICHEN

- 1: Induktor
- 2,3: Induktoräste des Induktors 1
- 2a-2d: Erwärmungsabschnitte des Induktorasts 2
- 2e-2g: Verbindungsabschnitte des Induktorasts 2
- 3a-3d: Erwärmungsabschnitte des Induktorasts 3
- 3e-3g: Verbindungsabschnitte des Induktorasts 3
- 4,5: Brücken des Induktors 1
- 6,7: Versorgungsäste des Induktors 1
- 101: Induktor
- 102,103: Induktoräste des Induktors 101
- 102a-102c: Erwärmungsabschnitte des Induktorasts 102
- 102d,102e: Verbindungsabschnitte des Induktorasts 102
- 103a-103c: Erwärmungsabschnitte des Induktorasts 103
- 103d,103e: Verbindungsabschnitte des Induktorasts 103
- 106,107: Versorgungsäste des Induktors 101
- B1: Breite der Laufbahnen L1,L2
- Bs: Breite des Materialabschnitts S
- C: Lagerschale eines Wälzlagers
- F: Stromfluss
- G: Gasstrom
- H: Härtegefüge
- K,Ka: Kühleinrichtungen
- L: Längsrichtung der Laufbahnen L1,L2
- 1: Länge des Induktors 1,1a
- L1,L2: Laufbahnen
- M: mittlerer Bereich des Materialabschnitts S
- 01,02: an die Laufbahnen L1,L2 angrenzende Oberflächenbereiche des Materialabschnitts S
- R: Raum zwischen den Induktorästen 102,103
- S: stegförmiger Materialabschnitt zwischen den Laufbahnen L1,L2

## Patentansprüche

1. Vorrichtung zum induktiven Erwärmen von einer an einem metallischen Werkstück ausgebildeten Zone, an die ein schmaler, vor Erwärmung zu schützender Materialabschnitt (S) grenzt, mit mindestens einem Induktor (1,1a), **gekennzeichnet durch** eine Kühleinrichtung (K,Ka), die während der Erwärmung der zu härtenden Zone (L1,L2) ein Kühlfluid auf den vor Erwärmung zu schützenden Materialabschnitt (S) des Werkstücks ausbringt.

2. Vorrichtung nach Anspruch 1, **dadurch gekennzeichnet, dass** die Kühleinrichtung (K,Ka) ein gasförmiges Kühlfluid ausbringt.

3. Vorrichtung nach einem der voranstehenden Ansprüche, **dadurch gekennzeichnet, dass** der Induktor (1,1a) zum induktiven Erwärmen von zwei nebeneinander an dem metallischen Werkstück ausgebildeten, durch den zwischen ihnen liegenden, vor Erwärmung zu schützenden Materialabschnitt (S) getrennten Bahnen (L1,L2) bestimmt ist und einen ersten Induktorast (2;102), der der ersten Bahn (L1) zugeordnet ist, einen zweiten Induktorast (3;103), der der zweiten Bahn (L2) zugeordnet ist, und Versorgungsäste (6,7;106,107) umfasst, über die die Induktoräste (2,3;102,103) mit einer Energieversorgung verbunden sind.

4. Vorrichtung nach Anspruch 3, **dadurch gekennzeichnet, dass** die Induktoräste (2,3;102,103) und Versorgungsäste (6,7;106,107) derart miteinander verschaltet sind, dass die quer zur Längserstreckung der Bahnen (L1,L2) laufenden Felder sich im Bereich des die Bahnen (L1,L2) voneinander trennenden Materialabschnitts (S) aufheben.

5. Vorrichtung nach einem der Ansprüche 3 oder 4, **dadurch gekennzeichnet, dass** die Kühleinrichtung (K) in dem zwischen den Induktorästen (2,3;102,103) vorhandenen Raum (R) angeordnet ist.

6. Vorrichtung nach einem der voranstehenden Ansprüche, **dadurch gekennzeichnet, dass** sie eine Einrichtung zum Bewegen des Induktors (1,101) längs der zu erwärmenden Bahnen umfasst.

7. Vorrichtung nach einem der voranstehenden Ansprüche, **dadurch gekennzeichnet, dass** die Kühleinrichtung (1,1a) in Vorschubrichtung (V) vor oder hinter dem Induktor (1,1a) angeordnet ist.

8. Vorrichtung nach Anspruch 7, **dadurch gekennzeichnet, dass** die Kühleinrichtung ein in den zwischen den Induktorästen (2,3;102,103) vorhandenen Raum (R) ragendes Rohr umfasst, an dessen freien Ende die Düse angeordnet ist.

9. Verwendung einer gemäß einem der Ansprüche 1 bis 8 ausgebildeten Vorrichtung (1;101) zum gleichzeitigen induktiven Erwärmen von zwei nebeneinander und mit Abstand zueinander an einem Werkstück ausgebildeten Bahnen (L1,L2), die durch einen schmalen, vor Erwärmung zu schützenden Materialabschnitt (S) getrennt sind.

10. Verwendung nach Anspruch 9, **dadurch gekennzeichnet, dass** das Werkstück ein Wälzlagerteil (C) ist, in das zwei die zu erwärmenden Bahnen (L1,L2) bildende, und durch einen als Steg ausgebildeten Materialabschnitt (S) voneinander getrennte Rillen für Wälzkörper des Wälzlagers eingeformt sind.
